# EUROPÄISCHE PATENTSCHRIFT

(11) **EP 2 127 856 B1**
(45) Veröffentlichungstag und Bekanntmachung des Hinweises auf die Patenterteilung: **20.02.2013**
(21) Anmeldenummer: 08075534.1
(22) Anmeldetag: 29.05.2008
(51) Int. Cl.: B29C 70/74, B29C 70/64, B29C 70/72

(54) **Verfahren zum Herstellen eines gehäusten elektronischen Bauteils und gehäustes elektronisches Bauteil**
Method for producing an encased electronic component and encased electronic component
Procédé de fabrication d'un composant électronique muni d'un boîtier et composant électronique muni d'un boîtier

(43) Veröffentlichungstag der Anmeldung: 02.12.2009
(73) Patentinhaber: Fraunhofer-Gesellschaft zur Förderung der angewandten Forschung e.V., 80686 München (DE)
(72) Erfinder: Braun, Tanja, 14052 Berlin (DE); Bauer, Jörg, 13156 Berlin (DE); Becker, Karl-Friedrich, 10247 Berlin (DE)
(74) Vertreter: Pfenning, Meinig & Partner GbR

(56) Entgegenhaltungen:
- DE-A1-102004 046 208
- JP-A- 59 230 714
- US-A- 4 449 690
- US-A- 5 976 297
- US-A- 6 147 301
- US-A1- 2002 100 605

## Beschreibung

Die Erfindung betrifft ein Verfahren zum Herstellen eines gehäusten elektronischen Bauteils, bei dem ein flüssiges Gehäusematerial in einem Flüssigverkapselungs-Verfahren auf eine elektronische Schaltung aufgebracht wird, nach dem Oberbegriff des Hauptanspruchs sowie ein entsprechende herstellbares gehäustes elektronisches Bauteil.

Bei einem gattungsgemäßen Verfahren bildet das Gehäusematerial, das eine Polymermatrix sowie Füllstoffpartikel umfasst und das nach dem Aufbringen aushärtet, eine zumindest einen Teil der elektronischen Schaltung bedeckende oder umschließende Gehäuseschicht, die die elektronische Schaltung schützt. Ein so herstellbares elektronisches Bauteil, bei dem es sich zum Beispiel um einen gehäusten Halbleiterchip handeln kann, umfasst also neben einer elektronischen Schaltung eine zumindest einen Teil der elektronischen Schaltung bedeckende oder umschließende Gehäuseschicht aus einem eine Polymermatrix und Füllstoffpartikel umfassenden Gehäusematerial.

Derartige Verfahren zum Herstellen gehäuster elektronischer Bauteile sowie entsprechende gehäuste elektronische Bauteile sind aus dem Stand der Technik bekannt, z.B. aus der Druckschrift US-A-4 449 690, die ein Verfahren gemäß dem Oberbegriff des Anspruchs 1 und ein Produkt gemäß dem Oberbegriff des Anspruchs 11 offenbart. Typische Gehäusematerialien, die dabei für den Schutz von mikroelektronischen Bauteilen oder Systemen eingesetzt werden, bestehen aus einer Polymermatrix (z.B. Epoxidharz, Silikon, Polyurethan), der Füllstoffpartikel (z.B. SiO₂, Al₂O₃, Ag) zugesetzt werden, um die gewünschten mechanischen, thermomechanischen, thermischen oder elektrischen Eigenschaften zu realisieren. Für solche Mischungen wird eine homogene Verteilung der Füllstoffpartikel im Polymer angestrebt, um möglichst richtungsunabhängige Eigenschaften des Materials zu erhalten (Vermeiden von Anisotropie).

Gehäusematerialien, die davon abweichend inhomogen verteilte Fülstoffe enthalten, sind in der Druckschrift US-A-6 147 301 beschrieben.

Derart verkapselte Plastic Packages und polymerbasierte Mikrosysteme bieten bereits einen guten Schutz, inbesondere gegen mechanische Belastungen und wechselnde Temperaturbelastungen aus der Umgebung. Generell nehmen jedoch alle Polymere Feuchtigkeit/Wasser/Wasserdampf aus der Umgebung auf, so auch die in der Mikroelektronik eingesetzten polymeren Schutzmaterialien wie Molding Compounds, Glob Top Materials, Schutzlacke oder Vergussmaterialien. Daher bieten polymerbasierte Anwendungen zwar je nach Materialien und Schichtdicken bereits einen gewissen Feuchteschutz, bilden jedoch nie hermetisch abgeschlossene Systeme. Erfordert die Anwendung ein hermetisches oder nahezu hermetisches Packaging, können nur teuere und aufwendige Lösungen zum Einsatz kommen, wie z.B. keramische Packages mit gelöteten oder geschweißten Metallkappen, gesputterte Metalllagen oder Glaspassivierungen als Barriereschichten. Neben den hohen Kosten sind diese Technologien auch oft nicht vereinbar mit kostengünstigen Standardtechnologien, z.B. wegen notwendiger hoher Prozesstemperaturen.

Die durch das Package-Material aufgenommene Feuchtigkeit kann zum einen zum Quellen des Polymers führen und damit Spannungen in das Package einbringen, die zu Rissen und Delaminationen führen können. Zum anderen können auch Haftfestigkeitsverluste/Delaminationen durch Hydrolyse an den Grenzschichten entstehen. Diese Delaminationen können zu höheren Spannungen auf die elektrischen Kontrakte und somit zum elektrischen Ausfall führen. Auch kann Feuchtigkeit an metallischen Kontakten zu Korrosion und damit zum Defekt führen.

Für zukünftige Applikationen wird daher die Feuchteresistenz von dünnen Polymerlagen an Bedeutung zunehmen. Gleichzeitig werden aber die Anforderung an niedrige Kosten und hohe Zuverlässigkeit mit steigender Miniaturisierung und damit auch dünneren Schutzschichten nicht geringer werden.

Der Erfindung liegt also die Aufgabe zugrunde, ein mit möglichst geringem Aufwand realisierbares Verfahren zum Herstellen eines gehäusten elektronischen Bauteils vorzuschlagen, mit dem ein guter Schutz einer elektronischen Schaltung, insbesondere auch vor Feuchtigkeit, gewährleistet werden kann. Der Erfindung liegt ferner die Aufgabe zugrunde, ein dementsprechend einfach herstellbares gehäustes elektronisches Bauteil zu entwickeln, das eine auch vor Feuchtigkeit gut geschützte elektronische Schaltung umfasst. Diese Aufgabe wird erfindungsgemäß gelöst durch ein Verfahren mit den kennzeichnenden Merkmalen des Hauptanspruchs in Verbindung mit den Merkmalen des Oberbegriffs des Hauptanspruchs sowie durch ein gehäustes elektronisches Bauteil mit den Merkmalen des Nebenanspruchs. Vorteilhafte Ausgestaltungen und Weiterentwicklungen der Erfindungen ergeben sich mit den Merkmalen der Unteransprüche.

Dadurch, dass bei dem vorgeschlagenen Verfahren vor dem Aushärten oder während des Aushärtens des Gehäusematerials in einem außen liegenden Bereich der entstehenden Gehäuseschicht eine Oberflächenschicht mit einer erhöhten Konzentration der Füllstoffpartikel gebildet wird, wird ein durch diese Füllstoffpartikel bewirkter Feuchtigkeitsschutz der elektronischen Schaltung erreicht, wobei die erhöhte Konzentration der Füllstoffpartikel in der Oberflächenschicht in vorteilhafter Weise verhindert, dass Feuchtigkeit auch nur in die Gehäuseschicht eindringt. Das wird bei dem vorliegenden Verfahren durch eine ausgesprochen aufwandsarm realisierbare Flüssigverkapselung erreicht, ohne dass ein aufwändiges Auflaminieren von Feuchtigkeitsbarrieren erforderlich wäre. Das Gehäusematerial kann dabei auf sehr unterschiedliche Weise auf die elektronische Schaltung aufgebracht werden, beispielsweise durch Gießen des Gehäusematerials auf oder um die elektronische Schaltung oder durch Eintauchen der elektronischen Schaltung oder zumindest eines Teils der elektronischen Schaltung in das flüssige Gehäusematerial.

Ein elektronisches Bauteil, dass sich mit einem Verfahren hier vorgeschlagener Art in vorteilhaft einfacher Weise herstellen lässt und in dem eine elektronische Schaltung in vorteilhafter Weise besonders gut gegen eindringende Feuchtigkeit geschützt ist, zeichnet sich dadurch aus, dass die von der Gehäuseschicht umfassten Füllstoffpartikel in einer außen liegenden Oberflächenschicht der Gehäuseschicht mit einer gegenüber tiefer liegenden Bereichen der Gehäuseschicht erhöhten Konzentration vorliegen. Dabei können die Füllstoffpartikel in der Oberflächenschicht auch in miteinander verschmolzener Form vorliegen und sollen auch dann noch als Füllstoffpartikel im Sinne der vorliegenden Schrift bezeichnet werden. In jedem Fall ist die Oberflächenschicht insofern als Teil der Gehäuseschicht identifizierbar und von dieser umfasst, als sie mit dieser zusammen aus dem ursprünglich noch weitgehend homogenen flüssigen Gehäusematerial hergestellt wird, wobei sich die Polymermatrix der Gehäuseschicht typischerweise auch über die Oberflächenschicht erstreckt, die Oberflächenschicht sowie alle tiefer liegenden Schichten der Gehäuseschicht also eine gemeinsame Polymermatrix aufweisen.

Bei den Füllstoffpartikeln handelt es sich um hydrophobe Füllstoffpartikel, die der Oberflächenschicht die gewünschte wasserabweisende Eigenschaft verleihen. Zusätzlich zu diesen hydrophoben Füllstoffpartikeln können zu anderen Zwecken, beispielsweise zum Realisieren bestimmter mechanischer, thermischer oder elektrischer Eigenschaften, auch andere Füllstoffe beigefügt sein, die typischerweise ebenfalls in Partikelform beigegeben werden und beispielsweise aus Siliziumoxiden, Aluminiumoxiden oder Silber bestehen können. Nachfolgend soll sich der Begriff Füllstoffpartikel jedoch immer auf die hydrophoben Partikel innerhalb der Gehäuseschicht beziehen, deren Konzentration sich während des beschriebenen Verfahrens zur Oberflächenschicht hin verlagert.

Die elektronische Schaltung des gehäusten elektronischen Bauteils umfasst typischerweise einen integrierten Schaltkreis, der beispielsweise durch einen oder mehrere Halbleiterchips gegeben sein kann. Das Bauteil kann also insbesondere ein gehäuster Halbleiterchip sein, der wiederum sowohl Leadframe-basiert als auch substratbasiert ausgeführt sein kann. Alternativ kann es sich bei dem vorgeschlagenen elektronischen Bauteil auch um eine bestückte Leiterplatte oder ein mehrstöckiges Paket mikroelektronischer Bauteile oder mehrerer bestückter Leiterplatten handeln, die zumindest teilweise mit dem Gehäusematerial verkapselt werden.

Vor und während des Aufbringens des Gehäusematerials auf die elektronische Schaltung sollten die Füllstoffpartikel noch homogen in dem Gehäusematerial verteilt sein, damit die Gehäuseschicht letztendlich eine reproduzierbare Struktur erhält. Dabei können die Füllstoffpartikel bei bevorzugten Ausführungen einen Massenanteil von zwischen 0,1 % und 20 %, vorzugsweise einen Massenanteil von zwischen 0,5 % und 10 % und besser noch von zwischen 1 % und 10 % des Gehäusematerials bilden, damit einerseits eine hinreichend gute Feuchtigkeitsresistenz der Oberflächenschicht erreicht wird und andererseits mechanische Eigenschaften des Gehäusematerials nicht nachteilig durch die Füllstoffpartikel beeinflusst werden. Die Gehäuseschicht bildet bei dem vorgeschlagenen Verfahren bzw. dem damit hergestellten elektronischen Bauteil ein Mehrphasensystem, dass sich selbst organisiert ausbildet. Das kann durch verschieden Effekte verursacht sein, die auch einander verstärkend zusammenwirken können, durch Dichteunterschiede, die ein Aufsteigen der Füllstoffpartikel im flüssige Gehäusematerial bewirken, oder durch Oberflächeneigenschaften der Füllstoffpartikel, aufgrund derer eine Anordnung der Füllstoffpartikel an einer Oberfläche der Gehäuseschicht energetisch günstiger ist als im Innern der Polymermatrix. Das kann erreicht werden, indem für die Füllstoffpartikel ein Material gewählt wird, dass, gegebenenfalls nach einer Oberflächenbehandlung, mit Luft eine Grenzschicht verhältnismäßig geringer Oberflächenspannung bildet. Dabei sollten die Füllstoffpartikel andererseits so gestaltet sein, dass sie sich vor dem Auftragen auf die elektrische Schaltung problemlos weitgehend homogen in dem flüssigen Gehäusematerial verteilt halten lassen, und erst nach dem Auftragen der typischerweise verhältnismäßig dünnen Gehäuseschicht zur Oberfläche hin verlagern. Das kann unterstützt werden, indem das Gehäusematerial zum Herbeiführen der erhöhten Konzentration der Füllstoffpartikel in der Oberflächenschicht erwärmt wird, was unmittelbar vor dem Auftragen, während des Auftragens oder nach dem Auftragen geschehen kann. Eine solche Erwärmung führt typischerweise zu einer reduzierten Viskosität, was eine erhöhte Beweglichkeit der Füllstoffpartikel zur Folge hat und deren Bewegung in Richtung Oberflächenschicht erleichtert.

Letztlich sollte die Konzentration der Füllstoffpartikel bzw. eines die Füllstoffpartikel bildenden Materials in der Oberflächenschicht mindestens dreimal so groß sein, vorzugsweise mindestens fünfmal so groß, wie in einer tiefer liegenden Schicht der Gehäuseschicht. Dabei kann zwischen der Oberflächenschicht und der tiefer liegenden Schicht eine deutlich erkennbare Phasengrenze oder ein fließender Übergang allmählich geringer werdender Konzentration der Füllstoffpartikel vorliegen.

In jedem Fall sollte darauf geachtet werden, dass zwischen den Füllstoffpartikeln und der Polymermatrix eine hinreichend gute Verbindung besteht, um einen Zusammenhalt der Gehäuseschicht zu gewährleisten. Die Polymermatrix kann aus einem für Verkapselungsmaterialien üblichen Material wie Epoxidharz, Silikon, Polyurethan, Acrylat, Polyimid bestehen oder eines oder mehrere dieser Materialien enthalten. Damit die Füllstoffpartikel die gewünschten Eigenschaften erhalten, hydrophop zu sein, sich vor dem Auftragen homogen im Gehäusematerial in der Schwebe halten zu lassen und anschließend unter Bildung einer Phase erhöhter Konzentration in die Oberflächenschicht zu driften, können die Füllstoffpartikel z. B. aus Fettsäuren, Polyethylen, Polyethylen-Copolymeren, anderen hydrophoben Wachsen oder einen oder mehrere dieser Stoffe enthaltenen Materialien gebildet werden. Wenn die Polymermatrix aus Acrylatharzen gebildet wird, eignen sich insbesondere Copolymere mit Acrylat- oder Vinylgruppen zur Herstellung der Füllstoffpartikel. Bei einer Verwendung von Urethanen oder Epoxiden für die Polymermatrix sind, insbesondere Hydroxylgruppen enthaltende Wachse für die Herstellung der Füllstoffpartikel geeignet. Um die Oberflächeneigenschaften der Füllstoffpartikel so einzustellen, dass diese einerseits hinreichend schnell in dem flüssigen Gehäusematerial driften können, um die Oberflächenschicht auszubilden, andererseits aber nicht zu schnell, um sich im Gehäusematerial in der Schwebe halten zu lassen, können die Füllstoffpartikel oberflächenbehandelt werden, bevor sie dem Gehäusematerial beigemischt werden. Insbesondre können die Füllstoffpartikel dazu silanisiert, plasmabehandelt oder mit Tensiden oberflächenbehandelt werden. Eine ähnliche und ähnlich vorteilhafte Wirkung kann sich erzielen lassen, indem der Polymermatrix zur Bildung des Gehäusematerials zusätzlich Tenside beigemischt werden, die so dosiert werden können, dass eine optimale Einstellung einer Entmischungstendenz von Polymermatrix und Füllstoffpartikeln erreicht wird.

Eine zuverlässige Ausbildung der Oberflächenschicht und zufriedenstellend wasserabweisende Eigenschaften dieser Oberflächenschicht lassen sich besonders gut realisieren, wenn die Füllstoffpartikel zumindest beim Aufbringen des Gehäusematerials einen Durchmesser von zwischen 50 nm und 20 µm haben.

Bei einer Weiterbildung des vorgeschlagenen Verfahrens kann zusätzlich vorgesehen sein, dass zumindest ein Teil der in der Oberflächenschicht enthaltenen Füllstoffpartikel während des Aushärtens oder nach dem Aushärten des Gehäusematerials durch Erwärmen und/oder durch Bestrahlung miteinander verschmolzen werden, um eine möglichst geschlossene hydrophobe Deckschicht auszubilden. Dazu kann die Oberflächenschicht beispielsweise mit Infrarotstrahlung bestrahlt werden, vorzugsweise mit Hilfe eines Lasers.

Ausführungsbeispiele der Erfindung werden nachfolgend anhand der Figuren 1 bis 6 erläutert. Es zeigen
- Figuren 1 bis 3:: ein gehäustes elektronisches Bauteil in drei Stadien seiner Herstellung, wobei das elektronische Bauteil jeweils in einem Querschnitt dargestellt ist, und
- Figuren 3 bis 6:: eine entsprechende Darstellung eines Herstellungsverfahrens für ein gehäustes elektronisches Bauteil in einer anderen Ausführung der Erfindung.

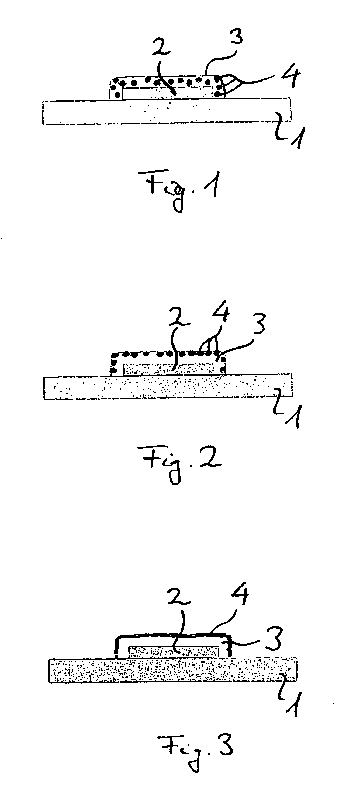

Bei dem elektronischen Bauteil, dessen Herstellung anhand der Figuren 1 bis 3 veranschaulicht ist, handelt es sich um einen substratbasierten gehäusten Halbleiterchip. Dieser weist ein Substrat 1 auf, auf dem ein integrierter Schaltkreis 2 angeordnet ist. In einem ersten Verfahrensschritt, dessen Ergebnis in Figur 1 dargestellt ist, wird nun ein flüssiges Gehäusematerial 3 so auf den integrierten Schaltkreis 2 aufgebracht, dass das Gehäusematerial 3 eine den integrierten Schaltkreis 2 vollständig bedeckende Gehäuseschicht bildet, die bis auf das Substrat 1 hinunter reicht. Das Gehäusematerial 3 umfasst neben einer Polymermatrix, die aus Epoxidharz, Silikon, Polyurethan, Acrylat oder Polyimid gebildet sein kann, hydrophobe Füllstoffpartikel 4, die zunächst homogen in dem Gehäusematerial verteilt sind. Diese hydrophoben Füllstoffpartikel 4 sind aus einem hydrophoben Wachs gebildet, haben einen Durchmesser von etwa 100 nm und bilden einen Massenanteil von etwa 5 % des Gehäusematerials 3. Sofern die Polymermatrix aus einem Acrylatharz gebildet ist, können die Füllstoffpartikel 4 insbesondere aus einem mit Acrylat- oder Vinylgruppen versehenen Copolymer gebildet sein, bei Verwendung einer Polymermatrix aus Polyurethan oder Epoxidharz vorzugsweise aus einem Hydroxylgruppen enthaltenden Wachs. Stattdessen können die Füllstoffpartikel 4 auch aus anderen Polyethylen-Copolymeren, Polyethylen oder Fettsäuren gebildet sein. Außerdem können die Füllstoffpartikel 4 schon vor ihrer Beimischung zum Gehäusematerial 3 oberflächenbehandelt sein, beispielsweise durch Silanisierung, Plasmabehandlung oder Behandlung mit Tensiden. Zusätzlich zu den hydrophoben Füllstoffpartikeln 4 können dem Gehäusematerial 3 auch andere Füllstoffe in Form von in den Figuren nicht dargestellten Partikeln beigefügt sein, beispielsweise Siliziumoxide, Aluminiumoxide oder Silber. Schließlich können dem Gehäusematerial 3 zusätzlich Tenside beigemischt sein, mit Hilfe derer sich eine homogene Verteilung der Füllstoffpartikel 4 vor dem Auftragen und während des Auftragens des Gehäusematerials 3 aufrechterhalten lässt.

In einem weiteren Verfahrensschritt wird das Gehäusematerial 3, noch bevor es aushärtet, erwärmt, so dass es vorübergehend eine geringere Viskosität erhält. Alternativ kann eine solche Erwärmung auch vor dem Auftragen oder während des Auftragens des Gehäusematerials 3 erfolgen. Aufgrund einer damit erreichten erhöhten Beweglichkeit der hydrophoben Füllstoffpartikel 4 driften diese nun in Richtung einer dem integrierten Schaltkreis 2 abgewandten Oberfläche der durch das Gehäusematerial 3 gebildeten Gehäuseschicht. Ein Resultat dieses Verfahrensschritts ist in Figur 2 dargestellt. Noch bevor das Gehäusematerial 3 vollständig aushärtet wird so in einem außen liegenden Bereich der Gehäuseschicht eine Oberflächenschicht gebildet, in der die Füllstoffpartikel 4 mit einer gegenüber tiefer liegenden Bereichen der Gehäuseschicht erhöhten Konzentration vorliegen. Dabei ist die Konzentration der hydrophoben Füllstoffpartikel 4 beim vorliegenden Ausführungsbeispiel in der Oberflächenschicht mindestens 10 mal so groß wie in einer tiefer liegenden Schicht der Gehäuseschicht, so dass eine deutliche Phasengrenze zwischen der Oberflächenschicht und der tiefer liegenden Schicht der Gehäuseschicht erkennbar ist.

Während des anschließenden Aushärtens des Gehäusematerials oder alternativ erst nach dem Aushärten wird die Oberflächenschicht nun durch Bestrahlung mit einer Infrarotquelle, z.B. Laser, so erwärmt, dass die Füllstoffpartikel 4 dort miteinander verschmolzen werden und eine nahezu geschlossene hydrophobe Deckschicht bilden. Das Ergebnis dieses Verfahrensschritts ist in Figur 3 abgebildet. Schließlich kann noch ein überstehender Rand des Substrats 1 abgetrennt werden, um den fertigen gehäusten Halbleiterchip zu bilden. Bei einer alternativen Ausführung des beschriebenen Verfahrens wird auf das Erwärmen der Oberfläche durch Bestrahlung verzichtet, so dass die Füllstoffpartikel 4 auch beim fertigen Bauteil unverschmolzen in Partikelform vorliegen, so wie es in Figur 2 erkennbar ist. Bei einer anderen Abwandlung des Verfahrens bildet sich die durch eine erhöhte Konzentration der Füllstoffpartikel 4 ausgezeichnete Oberflächenschicht während des Aushärtens des Gehäusematerials 3 aufgrund entsprechender Oberflächeneigenschaften der Füllstoffpartikel 4 und unterstützt durch eine verhältnismäßig geringe Dichte dieser Füllstoffpartikel 4 spontan, ohne dass das Gehäusematerial 3 dazu erwärmt werden müsste.

In völlig entsprechender Weise kann auch ein Leadframe-basierter gehäuster Halbleiterchip hergestellt werden, bei dem der integrierte Schaltkreis 2 mit einem das Substrat 1 ersetzenden Leadframe verbunden ist und vollständig von dem Gehäusematerial 3 umschlossen wird.

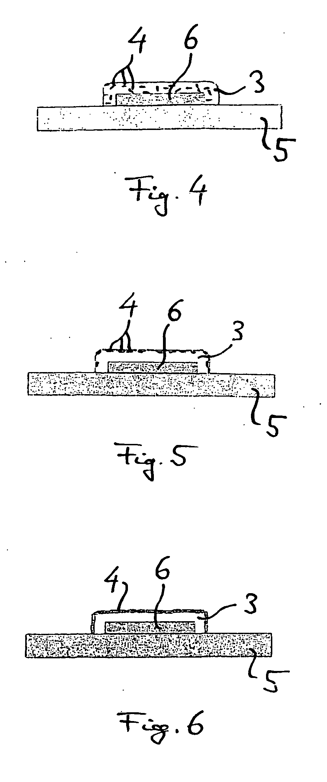

In den Figuren 4 bis 6 sind den Figuren 1 bis 3 entsprechende Stadien eines analogen Herstellungsverfahrens für ein anderes elektronisches Bauteil dargestellt. Wiederkehrende Merkmale sind dabei wieder mit denselben Bezugszeichen versehen. Dieses elektronische Bauteil umfasst eine Leiterplatte 5, die mit verschiedenen mikroelektronischen Bauelementen 6 bestückt ist, von denen in den Figuren 4 bis 6 nur eines abgebildet ist und mit denen die Leiterplatte 5 eine elektronische Schaltung bildet. Das auch hier in einem Flüssigverkapselungs-Verfahren, beispielsweise durch Gießen, aufgebrachte Gehäusematerial 3 bedeckt hier nur einen Teil der elektronischen Schaltung der insbesondere die durch die entstehende Gehäuseschicht zu schützenden mikroelektronischen Bauelemente 6 umfasst. Die zur Fertigstellung des so gehäusten elektronischen Bauteils durchgeführten Verfahrensschritte entsprechen den Schritten des zuvor anhand der Figuren 1 bis 3 beschriebenen Herstellungsverfahrens. In gleicher Weise können auch mehrstöckige Pakete mikroelektronischer Bauteile oder mehrerer entsprechend bestückter Leiterplatten so verkapselt werden, dass ein in einem Flüssigverkapselungs-Verfahren hergestelltes Gehäuse eine hydrophobe Oberflächenschicht aufweist, die zumindest den verkapselten Teil des Bauteils sehr effektiv gegen eindringende Feuchtigkeit schützt.

Die Grundidee der hier vorgeschlagenen Erfindung basiert also auf dem Einbringen zusätzlicher Füllstoffpartikel in für den Schutz von mikroelektronischen Aufbauten geeignete Materialien, wie z.B. Molding Compunds, Glob Top Materials, Schutzlacke oder Vergussmaterialien. Diese zusätzlichen Füllstoffe sollten zum Zeitpunkt der Verarbeitung der Mischung homogen mit den übrigen Füllstoffen in der Harzmatrix verteilt sein, um eine gleichmäßige Dosierung zu gewährleisten. Nach dem Applizieren des Materials soll, verursacht z.B. durch Temperaturerhöhung, eine gezielte Entmischung dieser zusätzlichen Füllstoffpartaikel 4 erfolgen in deren Folge sie sich an der Außenkontur des Schutzauftrages ansammeln.

Die Ansammlung der Füllstoffpartikel 4 an der Außenkontur kann die gewünschte Barrierewirkung gegenüber Feuchtigkeit zum einen bereits nach Aushärtung/Vernetzung des Materials ohne weitere Strukturveränderung besitzen, was z.B. durch hydrophobierende Wirkung auf die Oberfläche nach außen oder über eine Multilagenbildung mit extrem verlängertem Diffusionsweg erzielt werden kann.

Zum anderen besteht eine Möglichkeit zur Erzielung der Barrierewirkung der an der Oberfläche konzentrierten Partikel darin, über ihre thermisch oder durch Strahlung initiierte Verschmelzung während der Aushärtung/Vernetzung des Materials eine geschlossene hydrophobe Oberflächenschicht oder Deckschicht auszubilden.

Geeignete Materialien zur Realisierung dieses Grundprinzips sind vernetzende Bindemittel/Harzkombinationen aus den als Packaging Materialien erfolgreich eingesetzten Materialklassen, wie Epoxide, Urethane, Silikone, Acrylate, Imide, bzw. deren Kombinationen. Diesen Harzkombinationen können zur Erzielung spezieller Eigenschaften, wie geringer thermischer Ausdehnungskoeffizient, gute Wärmeleitfähigkeit, hohe Bruchzähigkeit, Zusatzstoffe wie SiO₂, Al₂O₃, Ruß, Ag, Cu oder auch Weichmacher/Flexibilisatoren, UV-Stabilisatoren u.a. zugesetzt sein. Als zur Realisierung der beschriebenen Grundidee geeignete Zusatzstoffe kommen verschiedene Arten von hydrophoben Wachsen, z.B. auf Basis von Polyethylen oder Copolymeren, oder andere hydrophobe Materialien in Frage, die zur oben beschriebenen Entmischung mit den Bindemittelharzen befähigt sind.

Zwischen 0,1 und 20 Masse-% der oben beschriebenen feuchteabweisenden Zusatzstoffe werden homogen in mikro-/nanometerskaliger Form allein oder zusammen mit den übrigen Füllstoffen in der Harzmatirix verteilt. Diese Verteilung kann durch Zusatzstoffe wie Tenside oder Einstellen einer besonders hohen Viskosität bis zum Zeitpunkt der Applikation der Mischung stabilisiert werden. Nach Dosierung erfolgt eine Entmischung und Ausbildung einer oberflächennahen Schicht erhöhter Konzentration der Füllstoffpartikel 4. Dies kann z.B. während einer Temperaturerhöhung durch Dichteunterschiede zwischen Harzmatrix und Füllstoffpartikeln 4 oder durch thermodynamsiche Effekte erfolgen. Von Bedeutung ist dabei auch, dass die Entmischung nur soweit erfolgt, dass eine mechanisch stabile Verbindung beider Schichten bestehen bleibt. Diese kann z.B. durch chemisch reaktive funktionelle Gruppen von Harz und Zusatzstoff realisiert werden, die miteinander reagieren können. Beispiele dafür sind die schon erwähnten Copolymere mit Acrylat oder Vinylgruppen zur Kombination mit Acrylatharzen oder Wachse mit geringen Anteilen an Hydroxylgruppen, insbesondere zur Kombination mit Urethanen oder Epoxiden.

## Patentansprüche

1. Verfahren zum Herstellen eines gehäusten elektronischen Bauteils, bei dem ein flüssiges Gehäusematerial (3) auf eine elektronische Schaltung aufgebracht wird, so dass das Gehäusematerial (3) eine zumindest einen Teil der elektronischen Schaltung bedeckende oder umschließende Gehäuseschicht bildet, wonach das Gehäusematerial (3) aushärtet, wobei das Gehäusematerial (3) eine Polymermatrix und Füllstoffpartikel (4) umfasst,
**dadurch gekennzeichnet,**
**dass** die Füllstoffpartikel (14) hydrophols sind und so gewählt werden, dass durch Dichteunterschiede, die ein Aufsteigen der Füllstoffpartikel (4) im flüssigen Gehäusematerial (3) bewirken, oder durch Oberflächeneigenschaften der Füllstoffpartikel (4), aufgrund derer eine Anordnung der Füllstoffpartikel (4) an einer Oberfläche der Gehäuseschicht energetisch günstiger ist als in einem Innern der Polymermatrix,
vor dem Aushärten oder während des Aushärtens des Gehäusematerials (3) in einem außen liegenden Bereich der Gehäuseschicht eine Oberflächenschicht mit einer erhöhten Konzentration der Füllstoffpartikel (4) gebildet wird.

2. Verfahren nach Ansprüch 1, **dadurch gekennzeichnet, dass** die Füllstoffpartikel (4) während des Aufbringens makroskopisch homogen in dem Gehäusematerial (3) verteilt sind.

3. Verfahren nach einem der Ansprüche 1 oder 2, **dadurch gekennzeichnet, dass** das Gehäusematerial (3) erwärmt wird zum Herbeiführen der erhöhten Konzentration der Füllstoffpartikel (4) in der Oberflächenschicht.

4. Verfahren nach einem der Ansprüche 1 bis 3, **dadurch gekennzeichnet, dass** zumindest ein Teil der in der Oberflächenschicht enthaltenen Füllstoffpartikel (4) während des Aushärtens oder nach dem Aushärten des Gehäusematerials (3) durch Erwärmung und/oder durch Bestrahlung miteinander verschmolzen werden.

5. Verfahren nach einem der Ansprüche 1 bis 4, **dadurch gekennzeichnet, dass** die Füllstoffpartikel (4) einen Massenanteil von zwischen 0,1 % und 20 % des Gehäusematerials (3) bilden.

6. Verfahren nach einem der Ansprüche 1 bis 5, **dadurch gekennzeichnet, dass** die Füllstoffpartikel (4) einen Durchmesser von zwischen 50 nm und 20 µm haben.

7. Verfahren nach einem der Ansprüche 1 bis 6, **dadurch gekennzeichnet, dass** die Füllstoffpartikel (4) aus einem folgender Stoffe gebildet sind oder mindestens einen dieser Stoffe enthalten: Fettsäuren, Polyethylen, Polyethylen-Copolymere, Copolymere mit Acrylat- oder Vinylgruppen, Hydroxygruppen enthaltende Wachse, andere hydrophobe Wachse.

8. Verfahren nach einem der Ansprüche 1 bis 7, **dadurch gekennzeichnet, dass** die Füllstoffpartikel (4) oberflächenbehandelt werden, bevor sie dem Gehäusematerial (3) beigemischt werden.

9. Verfahren nach einem der Ansprüche 1 bis 8, **dadurch gekennzeichnet, dass** der Polymermatrix zur Bildung des Gehäusematerials (3) zusätzlich Tenside beigemischt werden.

10. Verfahren nach einem der Ansprüche 1 bis 9, **dadurch gekennzeichnet, dass** die Polymermatrix aus einem folgender Stoffe gebildet ist oder mindestens einen dieser Stoffe enthält: Epoxidharze, Silikone, Polyurethane, Acrylate, Polyimide.

11. Gehäustes elektronisches Bauteil, umfassend eine elektronische Schaltung sowie eine zumindest einen Teil der elektronischen Schaltung bedeckende oder umschließende Gehäuseschicht aus einem eine Polymermatrix und Füllstoffpartikel (4) umfassenden Gehäusematerial (3), **dadurch gekennzeichnet, dass** das Bauteil durch ein Verfahren gemäß Anspruch 1 herstellbar ist und dass die Füllstoffpartikel (4) hydrophob sind und in einer außen liegenden Oberflächenschicht der Gehäuseschicht mit einer gegenüber tiefer liegenden Bereichen der Gehäuseschicht erhöhten Konzentration vorliegen.

12. Elektronisches Bauteil nach Anspruch 11, **dadurch gekennzeichnet, dass** die elektronische Schaltung einen integrierten Schaltkreis (2) umfasst.

13. Elektronisches Bauteil nach einem der Ansprüche 11 oder 12, **dadurch gekennzeichnet, dass** die Konzentration der Füllstoffpartikel (4) in der Oberflächenschicht mindestens dreimal so groß ist, wie in einer tiefer liegenden Schicht der Gehäuseschicht.

## Claims

1. A method for manufacturing an encased electronic component, in which a liquid housing material (3) is applied to an electronic circuit, so that the housing material (3) forms a housing layer which covers or surrounds at least part of the electronic circuit, after which the housing material (3) cures, the housing material (3) comprising a polymer matrix and filler particles (4),
**characterised in that**
the filler particles (4) are hydrophobic and are selected such that due to differences in density which cause the filler particles (4) to rise in the liquid housing material (3), or due to surface properties of the filler particles (4) because of which an arrangement of the filler particles (4) on a surface of the housing layer is more beneficial in energy terms than in an interior of the polymer matrix,
before the curing or during the curing of the housing material (3) in an outer region of the housing layer a surface layer with an increased concentration of the filler particles (4) is formed.

2. A method according to Claim 1, **characterised in that** the filler particles (4) during the application are distributed macroscopically homogeneously in the housing material (3).

3. A method according to one of Claims 1 or 2, **characterised in that** the housing material (3) is heated in order to bring about the increased concentration of the filler particles (4) in the surface layer.

4. A method according to one of Claims 1 to 3, **characterised in that** at least some of the filler particles (4) contained in the surface layer during the curing or after the curing of the housing material (3) are melted together by heating and/or by irradiation.

5. A method according to one of Claims 1 to 4, **characterised in that** the filler particles (4) form a percentage by weight of between 0.1 % and 20% of the housing material (3).

6. A method according to one of Claims 1 to 5, **characterised in that** the filler particles (4) have a diameter of between 50 nm and 20 µm.

7. A method according to one of Claims 1 to 6, **characterised in that** the filler particles (4) are formed from one of the following substances or contain at least one of these substances: fatty acids, polyethylene, polyethylene copolymers, copolymers with acrylate groups or vinyl groups, waxes containing hydroxyl groups, other hydrophobic waxes.

8. A method according to one of Claims 1 to 7, **characterised in that** the filler particles (4) are surface-treated before being admixed to the housing material (3).

9. A method according to one of Claims 1 to 8, **characterised in that** additionally surfactants are admixed to the polymer matrix for forming the housing material (3).

10. A method according to one of Claims 1 to 9, **characterised in that** the polymer matrix is formed from one of the following substances or contains at least one of these substances: epoxy resins, silicones, polyurethanes, acrylates, polyimides.

11. An encased electronic component, comprising an electronic circuit and a housing layer which covers or surrounds at least part of the electronic circuit, which layer is made from a housing material (3) comprising a polymer matrix and filler particles (4), **characterised in that** the component can be produced by a method according to Claim 1, and **in that** the filler particles (4) are hydrophobic and are present in an outer surface layer of the housing layer with an increased concentration compared with deeper-lying regions of the housing layer.

## Revendications

1. Procédé de fabrication d'un composant électronique sous boîtier, pour lequel un matériau de boîtier liquide (3) est appliqué sur un circuit électronique, de telle sorte que le matériau de boîtier (3) forme une couche de boîtier couvrant ou enveloppant au moins une partie du circuit électronique, après quoi le matériau de boîtier (3) durcit, le matériau de boîtier (3) comprenant une matrice de polymère et des particules de charge (4),
**caractérisé en ce que**
les particules de charge (4) sont hydrophobes et sont choisies de telle sorte que par différence de densité qui provoque une montée des particules de charge (4) dans le matériau de boîtier (3) liquide, ou par les propriétés de surface des particules de charge (4), du fait desquelles un agencement des particules de charge (4) sur une surface de la couche de boîtier est énergétiquement plus avantageuse que dans un intérieur de la matrice de polymère,
une couche superficielle avec une concentration plus élevée en particules de charge (4) est formée avant le durcissement ou pendant le durcissement du matériau de boîtier (3) dans une zone de la couche de boîtier se trouvant à l'extérieur.

2. Procédé selon la revendication 1, **caractérisé en ce que** pendant l'application, les particules de charge (4) sont réparties de façon macroscopiquement homogène dans le matériau de boîtier (3).

3. Procédé selon l'une quelconque des revendications 1 ou 2, **caractérisé en ce que** pour entraîner la concentration accrue des particules de charge (4) dans la couche superficielle, le matériau de boîtier (3) est réchauffé.

4. Procédé selon l'une quelconque des revendications 1 à 3, **caractérisé en ce qu'**au moins une partie des particules de charge (4) contenues dans la couche superficielle sont fondues ensemble par réchauffement ou par rayonnement pendant le durcissement ou après le durcissement du matériau de boîtier (3).

5. Procédé selon l'une quelconque des revendications 1 à 4, **caractérisé en ce que** les particules de charge (4) forment une fraction de masse comprise entre 0,1 % et 20 % du matériau de boîtier (3).

6. Procédé selon l'une quelconque des revendications 1 à 5, **caractérisé en ce que** les particules de charge (4) ont un diamètre compris entre 50 nm et 20 µm.

7. Procédé selon l'une quelconque des revendications 1 à 6, **caractérisé en ce que** les particules de charge (4) sont formées dans un des matériaux suivants ou au moins contiennent un des matériaux suivants : acides gras, polyéthylène, copolymères de polyéthylène, copolymères avec des groupes acrylates ou vinyles, cires contenant des groupes hydroxyles, autres cires hydrophobes.

8. Procédé selon l'une quelconque des revendications 1 à 7, **caractérisé en ce que** les particules de charge (4) sont traitées en surface avant d'être mélangées au matériau de boîtier (3).

9. Procédé selon l'une quelconque des revendications 1 à 8, **caractérisé en ce que**, pour la formation du matériau de boîtier (3), des tensioactifs sont en outre mélangés à la matrice de polymère.

10. Procédé selon l'une quelconque des revendications 1 à 9, **caractérisé en ce que** la matrice de polymère est formée dans un des matériaux suivants ou contient au moins un de ces matériaux : résines époxy, silicones, polyuréthanes, acrylates, polyimides.

11. Composant électronique sous boîtier, comprenant un circuit électronique ainsi qu'une couche de boîtier couvrant ou enveloppant au moins une partie du circuit électronique, dans un matériau de boîtier (3) comprenant une matrice de polymère et des particules de charge (4), **caractérisé en ce que** le composant peut être fabriqué par un procédé selon la revendication 1, et **en ce que** les particules de charge (4) sont hydrophobes et sont présentes dans une couche superficielle se trouvant à l'extérieur de la couche de boîtier en une concentration accrue en comparaison des zones se trouvant plus en profondeur.
